# EUROPÄISCHE PATENTSCHRIFT

(11) **EP 0 664 934 B1**
(45) Veröffentlichungstag und Bekanntmachung des Hinweises auf die Patenterteilung: **12.03.1997**
(21) Anmeldenummer: 93921786.5
(22) Anmeldetag: 04.10.1993
(51) Int. Cl.: H02K 19/24

(54) **NACH DEM RELUKTANZ-PRINZIP ARBEITENDER MOTOR UND/ODER GENERATOR**
MOTOR AND/OR GENERATOR WORKING ON THE RELUCTANCE PRINCIPLE
MOTEUR ET/OU GENERATRICE FONCTIONNANT SELON LE PRINCIPE DE LA RELUCTANCE

(30) Priorität: 15.10.1992 DE 9213945 U
(43) Veröffentlichungstag der Anmeldung: 02.08.1995
(73) Patentinhaber: SIEMENS AKTIENGESELLSCHAFT, 80333 München (DE)
(72) Erfinder: WINTER, Udo, D-97273 Kürnach (DE)
(86) Internationale Anmeldenummer: DE9300930
(87) Internationale Veröffentlichungsnummer: WO9409553

(56) Entgegenhaltungen:
- WO-A-92/07411

## Beschreibung

Die Erfindung bezieht sich auf einen nach dem Reluktanz-Prinzip arbeitenden Motor und/oder Generator gemäß Anspruch 1; ein nach dem Prinzip der statorerregten Synchronmaschine in Sektor-Bauweise arbeitender Starter-Generator gemäß den Merkmalen a)-c) ist durch die EP-B1-0 103 821 bekannt, ein nach den Merkmalen a)-d) arbeitender Starter-Generator ist in der PCT/EP 91/00302 (WO-A-92/07411) beschrieben.

Im erstgenannten durch die EP-B1-0 103 821 bekannten Fall sind die Sektorstator-Elemente eines Sektorstators durch einen axialen Abstandsraum voneinander gegenseitig getrennt. Die als Rotor des Motors und/oder Generators mit-benutzte Zylindermantelfläche eines Schwungrades, insbesondere der Kupplung einer Kraftfahrzeug-Verbrennungsmaschine, ist in Form von zwei Polzahnrädern gestaltet, die in einem gewissen axialen Abstand auf Lücke versetzt angeordnet sind.

Gemäß der PCT/EP 91/00302 ist in den axialen Abstandsraum zwischen den Sektorstator-Elementen eine axial magnetisierte Dauermagnetanordnung mit einer der Wicklungserregung in den Sektorstator-Elementen entgegengerichteten Magnetisierung angeordnet, derart daß sich deren Magnetfeld axial/tangential radial in den Jochen der Sektorstator-Elemente bzw. radial über die Statorzähne, den Luftspalt, die versetzten Rotorpole und axial/tangential über das Rotorjoch schließt. Durch das Zusammenwirken der durch die Erregerwicklungsteile steuerbaren Erregung einerseits und der durch die Dauermagnetanordnung gegebenen Dauermagnetisierung andererseits ist bei einfacher Steuerbarkeit der Erregung eine Reduzierung des Erregerwicklungskupfers möglich und ein unerwünschtes großes Streufeld, vor allem zwischen den Stirnflächen der axial voreinander liegenden Blechpakete der Sektorstator-Elemente, vermeidbar. Die Magnetanordnung schließt an ihren rückseitigen äußeren radialen Randbereichen bündig zu den Randbereichen der axial anliegenden Sektorstator-Elementen an.

Ein zusätzlicher Schutz gegenüber unerwünschten Streuflüssen kann gemäß vorliegender Erfindung dadurch erreicht werden, daß die zwischen den beiden Blechpaketen der Sektorstator-Elemente axial anliegend eingefügte Dauermagnetanordnung an ihren freien radialen Randbereichen mit einem radialen Joch-Überstand gegenüber den axial benachbarten Sektorstator-Elementen im Sinne einer zusätzlichen axialen Streufeld-Unterdrückung auch zwischen den radialen rückseitigen Stirnflächen der Sektorstator-Elemente vorgesehen ist; vorteilhafte Ausgestaltungen der Erfindung sind jeweils Gegenstand der Unteransprüche.

Eine besonders gute Wirkung gegen unerwünschte Streuflüsse der Dauermagnetanordnung ist außerdem dann gegeben, wenn die Magnetanordnung aus jeweils sowohl den Jochbogen als auch die Statorzähne eines Sektorstator-Elementes im wesentlichen abdeckenden Magnetteilen besteht; gemäß der PCT/EP 91/00302 ist nach einer besonderen Ausgestaltung für eine derartige Dauermagnetanordnung ein einstückiger gesinterter Formmagnet vorgesehen. Es hat sich erwiesen, daß derartige gesinterte Formmagnete, insbesondere aufgrund der komplizierten einstückig mit dem Jochbogen zu gestaltenden Statorzähe, nur mit hohem Aufwand fertigbar sind; man hat daher zu der Ausweichlösung gegriffen, die neue Magnetanordnung zweiteilig auszubilden und die die Statorzähne der Sektorstator-Elemente abdeckenden Magnetteile als gesonderte blockartige Sintermagnete im wesentlichen durch Einkleben zwischen den benachbarten Sektorstator-Elementen zu haltern.

Eine vorteilhafte einstückige sowohl den Jochbogen als auch die Statorzähne der Sektorstator-Elemente im wesentlichen abdeckende und gleichzeitig auch die radialen Joch-Überstände umfassende Dauermagnetanordnung kann bei geringem Fertigungsaufwand und auch bei rauhem Einsatz gewährleisteter Betriebstüchtigkeit nach einer bevorzugten Ausführungsform der Erfindung dadurch erreicht werden, daß die Dauermagnetanordnung aus einem kunststoffgebundenen Formmagneten mit einem Gemisch aus Ferritpartikeln und anderen Magnetpartikeln vergleichbar höherer magnetischer Koerzitivfeldstärke gebildet ist.

Durch eine derartige Dauermagnetanordnung kann einerseits der zur Verhinderung von unerwünschten Streuflüssen maximale Abstand zwischen den beiden Sektorstator-Elementen auch bei einem zur Gestaltung komplizierter Formen (Jochbogen; Statorzähne; Joch-Überstände) vorteilhaften kunststoffgebundenen Formmagneten erreicht werden, der bei einem fertigungsgebundenen Höchstanteil von ca. 80 % Magnetpartikeln einerseits durch die Beimengung von höherwertigen Magnetpartikeln die hinreichende Koerzitivfeldstärke zum Betrieb des Statorgenerators gewährleistet und andererseits durch die Beimischung von niederwertigen Ferritpartikeln einen verantwortbaren Kostenaufwand in Grenzen hält; dementsprechend ist das Mischungsverhältnis der verschiedenen Magnetpartikel bestimmt durch das optimale Verhältnis für einen einerseits kostengünstigen und andererseits die notwendige Koerzitivfeldstärke gewährleistenden einstückigen Dauermagnetanordung. Als Beimischung zu den Ferritpartikeln werden in vorteilhafter Weise Samarium-Kobalt-Partikel und/oder Neodym-Eisen-Bor-Partikel vorgesehen.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: eine stirnseitige Draufsicht auf ein Sektorstator-Element mit axial vorgesetzter Dauermagnetanordnung, gemäß Schnittverlauf I-I in FIG 2
- FIG 2: den in die Verbrennungsmaschine eines Kraftfahrzeuges eingebauten Sektorstator gemäß Teildarstellung in FIG 1 im Seitenschnitt gemäß Schnittverlauf II-II
- FIG 3: die axiale Draufsicht auf einen Sektorstator mit einer dessen äußeren radiale Randbereiche überragenden, axial zwischen den Sektorstator-Elementen angeordneten Dauermagnetanordnung.
- FIG 4: eine Schnittdarstellung durch den Sektorstator gemäß FIG 3 im Schnittverlauf IV-IV.

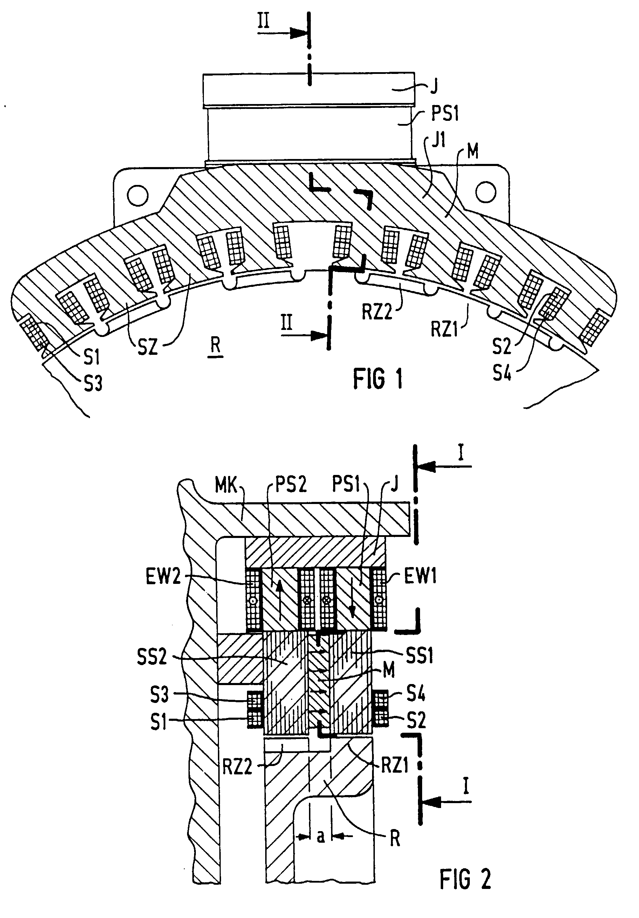

FIG 1 zeigt einen einzelnen Sektorstator SS gemäß Schnittverlauf I-I in FIG 2, der gemäß FIG 2 z.B. an dem Motor-kurbelgehäuse MK einer Kfz-Verbrennungsmaschine befestigt ist und sich über einen Umfangswinkel von beispielsweise ca. 70 Grad über das als Rotor R mitbenutzte Schwungrad der Verbrennungsmaschine erstreckt. Obwohl bei der hier dargestellten Pol- bzw. Wicklungsaufteilung die Funktionstüchtigkeit des erfindungsgemäßen Motor und/oder Generators auch bei nur einem einzigen Sektorstator SS am gesamten Umfang an sich gegeben ist, werden zweckmäßigerweise jeweils paarweise in tangentialem Abstand zueinander angeordnete Sektorstatoren am Umfang des Motorkurbelgehäuses derart angeordnet, daß sie sich etwa gegenüberstehen und bei elektrischer Zusammenschaltung der am Umfang verteilten Sektorstatoren die in jeweils einem Strang induzierten Spannungen insgesamt gleichphasig sind.

Der in FIG 1 bzw. 2 dargestellte Sektorstator SS enthält zwei hintereinander in axialem Abstand a getrennte Sektorstator-Elemente SS1 bzw.SS2. Jedes Sektorstator-Element SS1 bzw.SS2 weist insgesamt acht Statorzähne SZ auf, die axial fluchtend hintereinander angeordnet sind. Als Stator-Arbeitswicklung ist eine 4-strängige Wicklung mit jeweils um 90 Grad el. gegeneinander versetzten Wicklungssträngen S1,S2,S3,S4 gleicher Spulenweite vorgesehen. In dem hier dargestellten Ausführungsbeispiel sind Wicklungsstränge S1 und S3 um die Zähne der linken Zahngruppe des Sektorstators SS und die Wicklungsstränge S2 und S4 um die Zähne der rechten Zahngruppe des Sektorstators SS jeweils derart gewickelt, daß sie zwei axial hintereinander liegende Statorzähne umschlingen.

Jedes Sektorstator-Element SS1 bzw.SS2 mündet in einen radial überstehenden Polschenkel PS1 bzw.PS2, der jeweils von einem konzentrierten Erregerwicklungsteil EW1 bzw.EW2 umschlungen ist, der vorteilhafterweise als radial aufsteckbare Formspule ausgebildet ist. Die Erregerwicklungsteile EW1 bzw.EW2 sind - wie insbesondere aus FIG 2 ersichtlich - derart an eine steuerbare Gleichspannung angeschlossen, daß sich in den beiden zwischen den Sektorstator-Elementen SS1 und SS2 liegenden Spulenseiten die gleiche Stromrichtung ergibt. Die Polenden der Polschenkel PS1 und PS2 sind durch ein Rückschlußjoch J verbunden.

Als Rotor R ist der äußere Umfang des Kupplungs-Schwungrades eines Kfz-Verbrennungsmotors derart mitbenutzt, daß am Umfang zwei den Zahnreihen der Statorzähne SZ des ersten und zweiten Sektorstator-Elementes SS1 bzw.SS2 zugeordneten Zahnreihen mit gegeneinander in axialem Abstand und axial auf Lücke versetzten Rotorzähnen RZ1 bzw.RZ2 entstehen. Beide Zahnreihen stehen in magnetisch leitender Verbindung, da sie Teile des massiven Eisen-Kupplungsschwungrades sind.

Im axialen Abstandsraum zwischen den Sektorstator-Elementen SS1 bzw.SS2 ist eine axial magnetisierte Dauermagnetanordnung M vorgesehen, die aus einem im wesentlichen den Jochteil abdeckenden Jochbogen-Magnetteil (J1) und einem damit einstückigen, im wesentlichen die Statorzähne SZ abdeckenden Magnetteil besteht. Die Magnetisierung der Dauermagnetanordnung M ist derart, daß sie entgegengesetzt zu einem in den axialen Abstandsraum zwischen den Sektorstator-Elementen eintretenden Streufeld des durch die Erregerwicklungsteile EW1 und EW2 erzeugten Erregerfeldes bei nicht vorhandener Dauermagnetanordnung M gerichtet ist.

Ohne Erregerstrom in den Erregerwicklungsteilen EW1 bzw.EW2 reduziert der Rückschluß über das Rückschlußjoch J die magnetische Spannung der Dauermagnetanordnung M am Luftspalt zwischen den Statorzähnen SZ und dem Rotor R und damit auch das Luftspalterregerfeld auf einen unkritischen Restwert; der Rückschluß ist hierfür im Querschnitt zweckmäßigerweise dazu so ausgelegt, daß er auch den Remanenzfluß der Dauermagnetanordnung fast ungesättigt kurzschließen kann. Bei stromführenden Erregerwicklungsteilen EW1 und EW2 wird deren magnetische Spannung am Luftspalt zwischen den Statorzähnen SZ und den Rotorzahnreihen des Rotors R am Luftspalt wirksam; ab hinreichender Erregerstromstärke der Erregerwicklungsteile EW1 und EW2 ändert der Fluß durch den Rückschluß des Rückschlußjoches J sein Vorzeichen und geht danach zusammen mit dem Dauermagnetfluß der Dauermagnetanordnung M als wirksamer Erregerfluß über den Luftspalt.

Der Vorteil dieser Kombination von Dauermagneterregung durch die Dauermagnetanordnung M einerseits und elektrischer Erregung durch die Erregerwicklungsteile EW1 bzw.EW2 andererseits wird durch folgende Überlegung verdeutlicht: Hätte man den Stator und/oder Generator allein mit einer Dauermagnetanordnung M ausgeführt, so wäre infolge des dann unzulässigen Rückschlusses zwischen den lammelierten Blechpaketen der Sektorstator-Elemente SS1,SS2 das Erregerfeld unveränderlich gewesen; würde die Erregung rein elektrisch über die Erregerwicklungsteile EW1 und EW2 erfolgen, dann hätte sich ein sehr großes unerwünschtes Streufeld zwischen den Stirnflächen der axial in Abstand zueinander voreinanderliegenden lamellierten Blechpakete der Sektorstator-Elemente SS1 und SS2 ergeben.

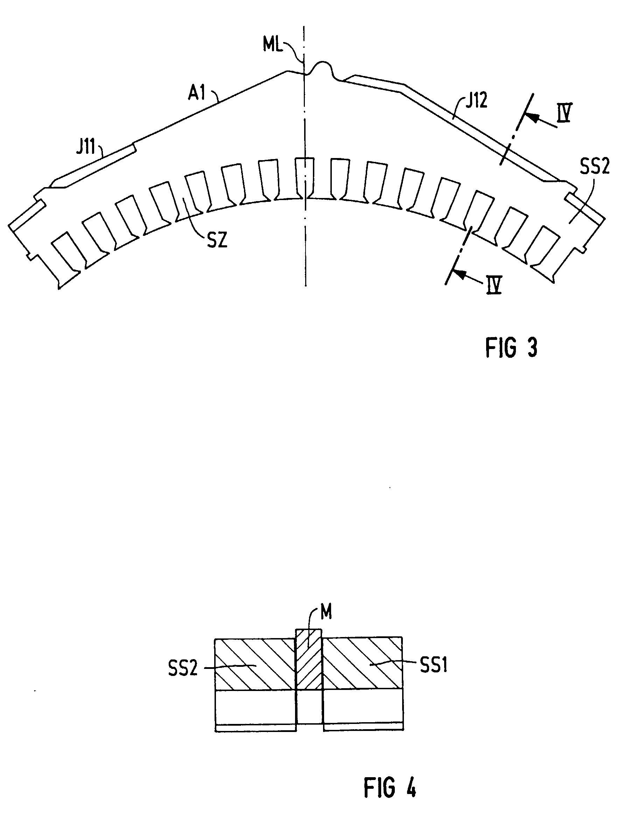

Wie aus FIG 3,4 anhand eines über seinen Bohrungsumfang mit gleichmäßiger Zahnteilung versehenen Sektorstators ersichtlich, weist der Jochbogen J1 der Magnetanordnung beidseitig einer für die Anbringung diskreter Polschenkel vorgesehenen Auflagefläche A1 radiale rückseitige Joch-Überstände J11 bzw. J12 gegenüber den benachbarten radialen rückseitigen Randflächen der Sektorstator-Elemente SS1 bzw.SS2 derart auf, daß in vorteilhafter und einfacher Weise auch Streuflüssen zwischen den radialen Randflächen der Sektorstator-Elemente SS1 bzw. SS2 eines Sektorstators entgegengewirkt werden kann.

Beim Ausführungsbeispiel gemäß FIG 3 ist im Sinne einer verminderten axialen Bauhöhe die Auflagefläche Al für den zugehörigen Polschenkel gegenüber der Symmetrie-Mittellinie ML des Sektorstators seitlich versetzt und dadurch der - hier nicht dargestellte - Polschenkel seitlich weggekippt aufsetzbar; dementsprechend ist der linke radiale Joch-Überstand J11 tangential kürzer als der zur Auflagefläche Al rechte radiale Joch-Überstand J12.

## Patentansprüche

1. Nach dem Reluktanz-Prinzip arbeitender Motor und/oder Generator mit den Merkmalen:
a) Der Stator weist über den Umfang des Rotors (R) verteilte, magnetisch voneinander getrennte Sektorstatoren (SS) auf;
b) Jeder Sektorstator (SS) enthält zwei gezahnte, in axialem Abstand (a) hintereinander angeordnete Sektorstator-Elemente (SS1 bzw.SS2) mit gemeinsamen, in Nuten zwischen den Stator-Zähnen (SZ) untergebrachten Arbeitswicklungen (Wicklungsstränge S1-S4);
c) jedes Sektorstator-Element (SS1 bzw.SS2) mündet jeweils in radial überstehende Polschenkel (PS1 bzw. PS2), die jeweils im Sinne entgegengesetzter Polarität von einem umschlingenden Erregerwicklungsteil (EW1 bzw.EW2) erregbar und radial außen durch ein Rückschlußjoch (J) verbunden sind;
d) in dem axialen Abstandsraum zwischen den Sektorstator-Elementen (SS1 bzw.SS2) ist eine axial magnetisierte Dauermagnetanordnung (M) mit einer der Wicklungserregung in den Sektorstator-Elementen entgegengerichteten Magnetisierung angeordnet;
e) die Dauermagnetanordnung (M) weist einen radialen Joch-Überstand (J11 bzw.J12) gegenüber den axial benachbarten Sektorstator-Elementen (SS1 bzw.SS2) im Sinne einer Unterdrückung eines Streuflusses zwischen den radialen Randbereichen der benachbarten Sektorstator-Elemente (SS1 bzw.SS2) auf.

2. Nach dem Reluktanz-Prinzip arbeitender Motor und/oder Generator nach Anspruch 1 mit dem Merkmal:
f) Die radialen Joch-Überstände (J11 bzw.J12) erstrecken sich jeweils tangential beidseitig der jedem Sektorstator-Element (SS1 bzw.SS2) zugeordneten Polschenkel (PS1 bzw.PS2).

3. Nach dem Reluktanz-Prinzip arbeitender Motor und/oder Generator nach Anspruch 2 mit dem Merkmal:
g) Die radialen Joch-Überstände (J11 bzw.J12) erstrecken sich jeweils tangential beidseitig von Auflageflächen (A1 bzw.A2) der Sektorstator-Elemente (SS1 bzw.SS2) für jeweils als diskrete Bauteile auflegbare Polschenkel (PS1 bzw.PS2).

4. Nach dem Reluktanz-Prinzip arbeitender Motor und/oder Generator nach Anspruch 2 oder 3 mit dem Merkmal:
h) Die radialen Joch-Überstände (J11 bzw.J12) sind zueinander tangential unterschiedlich lang entsprechend den jeweils zu der radialen Symmetrie-Mittellinie (ML) des Sektorstators (SS) seitlich versetzten Polschenkel (PS1 bzw. PS2) bzw. deren Auflageflächen (A1 bzw.A2).

5. Nach dem Reluktanz-Prinzip arbeitender Motor und/oder Generator nach Anspruch 3 und/oder 4 mit dem Merkmal:
i) Die radiale Höhe der radialen Joch-Überstände (J11 bzw. J12) entspricht der radialen Höhe der Auflagefläche (A1 bzw. A2).

6. Nach dem Reluktanz-Prinzip arbeitender Motor und/oder Generator nach einem der Ansprüche 1-5 mit dem Merkmal:
j) Die Dauermagnetanordnung (M) besteht aus einem einstückigen, sowohl die Statorzähne (SZ) als auch einen diese verbindenden Jochbogen (J1) zumindest teilweise abdeckenden kunststoffgebundenen Formmagneten mit einem Gemisch aus Ferritpartikeln und anderen Magnetpartikeln höherer magnetischer Koerzitivfeldstärke.

7. Nach dem Reluktanz-Prinzip arbeitender Motor und/oder Generator nach Anspruch 6 mit dem Merkmal:
k) Das Gemisch besteht einerseits aus Ferritpartikeln und andererseits aus SmCo(Samarium-Kobalt)-Partikeln und/oder NdFeB(Neodym-Eisen-Bor)-Partikeln.

8. Nach dem Reluktanz-Prinzip arbeitender Motor und/oder Generator nach Anspruch 5 und/oder 6 mit dem Merkmal:
l) Das Mischungsverhältnis der verschiedenen Magnetpartikel ist bestimmt durch das optimale Verhältnis für eine einerseits kostengünstige und andererseits die notwendige Koerzitivfeldstärke gewährleistende einstückige Dauermagnetanordnung (M).

## Claims

1. Motor and/or generator operating on the reluctance principle and having the features:
a) the stator has sector stators (SS) which are distributed over the circumference of the rotor (R) and are magnetically isolated from one another;
b) each sector stator (SS) includes two toothed sector stator elements (SS1 and SS2 respectively) which are arranged one behind the other with an axial separation (a) and have common power windings (winding strands S1-S4) which are accommodated in slots between the stator teeth (SZ);
c) each sector stator element (SS1 or SS2 respectively) in each case opens into radially projecting pole limbs (PS1 and PS2 respectively) which can in each case be excited in the direction of opposite polarity by an excitation winding part (EW1 or EW2 respectively) which loops around them, and which pole limbs (PS1 and PS2 respectively) are connected radially on the outside by a magnetic return path yoke (J);
d) an axially magnetized permanent magnet arrangement (M), which is magnetized in the opposite direction to the winding excitation in the sector stator elements, is arranged in the axial separating space between the sector stator elements (SS1 and SS2 respectively);
e) the permanent magnet arrangement (M) has a radial yoke overhang (J11 or J12 respectively) with respect to the axially adjacent sector stator elements (SS1 and SS2 respectively), in the sense of suppressing any stray flux between the radial edge regions of the adjacent sector stator elements (SS1 and SS2 respectively).

2. Motor and/or generator according to Claim 1 operating on the reluctance principle, having the feature:
f) the radial yoke overhangs (J11 and J12 respectively) in each case extend tangentially on both sides of the pole limbs (PS1 and PS2 respectively) associated with each sector stator element (SS1 or SS2 respectively).

3. Motor and/or generator according to Claim 2 operating on the reluctance principle, and having the feature:
g) the radial yoke overhangs (J11 and J12 respectively) in each case extend tangentially on both sides of bearing surfaces (A1 and A2 respectively) of the sector stator elements (SS1 and SS2 respectively) for pole limbs (PS1 and PS2 respectively) which can in each case be fitted as discrete components.

4. Motor and/or generator according to Claim 2 or 3 operating on the reluctance principle, and having the feature:
h) the radial yoke overhangs (J11 and J12 respectively) have different tangential lengths from one another corresponding to the pole limbs (PS1 and PS2 respectively) and their bearing surfaces (A1 and A2 respectively), which pole limbs are in each case laterally offset with respect to the radial symmetry centre line (ML) of the sector stator (SS).

5. Motor and/or generator according to Claim 3 and/or 4 operating on the reluctance principle, and having the feature:
i) the radial height of the radial yoke overhangs (J11 and J12 respectively) corresponds to the radial height of the bearing surface (A1 or A2 respectively).

6. Motor and/or generator according to one of Claims 1-5 operating on the reluctance principle, and having the feature:
j) the permanent magnet arrangement (M) comprises an integral plastic-bonded shaped magnet which at least partially covers both the stator teeth (SZ) and a yoke bow (J1) which connects them and has a mixture of ferrite particles and other magnetic particles having a relatively high magnetic coercivity field strength.

7. Motor and/or generator according to Claim 6 operating on the reluctance principle, and having the feature:
k) the mixture comprises on the one hand ferrite particles and on the other hand SmCo (samariumcobalt) particles and/or NdFeB (neodymium-ironboron) particles.

8. Motor and/or generator according to Claim 5 and/or 6 operating on the reluctance principle, and having the feature:
l) the mixture ratio of the various magnetic particles is determined by the optimum ratio for an integral permanent magnet arrangement (M) which on the one hand is cost-effective and on the other hand ensures the necessary coercivity field strength.

## Revendications

1. Moteur et/ou générateur fonctionnant selon le principe de la réluctance et ayant les caractéristiques suivantes:
a) le stator comporte des stators en secteurs (SS) magnétiquement séparés les uns des autres et répartis sur la périphérie du rotor (R);
b) chaque stator en secteur (SS) comporte deux éléments de stator (SS1 et SS2) dentés, placés axialement à distance (a) l'un derrière l'autre et portant des enroulements de travail (branches d'enroulement S1-S4) communs, logés dans des encoches entre les dents statoriques (SZ);
c) chaque élément de stator (SS1 ou SS2) débouche dans une partie de pôle (PS1 ou PS2) radialement saillante et ces parties de pôle peuvent être excitées pour avoir des polarités contraires par une partie (EW1 ou EW2) d'un enroulement d'excitation qui les entoure, lesdites parties de pôle saillantes étant reliées entre elles, radialement à l'extérieur, par une culasse (J) de reflux ou de fermeture de circuit magnétique;
d) un dispositif d'aimant permanent (M), magnétisé axialement en sens contraire à l'excitation produite par l'enroulement d'excitation dans les éléments de stator, est placé dans l'intervalle axial entre les éléments de stator (SS1 et SS2);
e) le dispositif d'aimant permanent (M) présente une saillie radiale de culasse (J11 et J12), par rapport aux éléments de stator (SS1 et SS2) axialement voisins, en vue de la suppression d'un flux de fuite entre les zones radiales marginales des éléments de stator (SS1 et SS2) voisins.

2. Moteur et/ou générateur fonctionnant selon le principe de la réluctance, selon la revendication 1, ayant la caractéristique:
f) les saillies radiales de culasse (J11 et J12) s'étendent tangentiellement des deux côtés de la partie de pôle saillante (PS1 ou PS2) coordonnée à chaque élément de stator (SS1 ou SS2.

3. Moteur et/ou générateur fonctionnant selon le principe de la réluctance, selon la revendication 2, ayant la caractéristique:
g) les saillies radiales de culasse (J11 et J12) s'étendent tangentiellement des deux côtés de surfaces d'appui (A1 et A2) des éléments de stator (SS1 et SS2) prévues pour des parties de pôle saillantes (PS1 et PS2) pouvant être mises en place sous la forme de pièces séparées.

4. Moteur et/ou générateur fonctionnant selon le principe de la réluctance, selon la revendication 2 ou 3, ayant la caractéristique:
h) les saillies radiales de culasse (J11 et J12) possèdent entre elles des longueurs tangentielles différentes, en conformité avec les parties de pôle saillantes (PS1 et PS2) ou leurs surfaces d'appui (A1 et A2) décalées latéralement par rapport à une ligne médiane radiale de symétrie (ML) du stator en secteur (SS).

5. Moteur et/ou générateur fonctionnant selon le principe de la réluctance, selon la revendication 3 et/ou 4, ayant la caractéristique:
i) la hauteur radiale des saillies radiales de culasse (J11 et J12) correspond à la hauteur radiale de la surface d'appui (A1 ou A2).

6. Moteur et/ou générateur fonctionnant selon le principe de la réluctance, selon une des revendications 1 - 5, ayant la caractéristique:
j) le dispositif d'aimant permanent (M) est formé d'un aimant d'un seul tenant, recouvrant au moins partiellement les dents statoriques (SZ) aussi bien qu'un arc de culasse (J1) qui les relie, aimant qui est obtenu par moulage d'un mélange de particules de ferrite et d'autres particules magnétiques ayant une intensité de champ magnétique coercitif plus élevée et d'un liant en résine synthétique.

7. Moteur et/ou générateur fonctionnant selon le principe de la réluctance, selon la revendication 6, ayant la particularité:
k) le mélange est constitué d'une part de particules de ferrite et d'autre part de particules de SmCo (samarium-cobalt) et/ou de particules de NdFeB (néodyme-fer-bore).

8. Moteur et/ou générateur fonctionnant selon le principe de la réluctance, selon la revendication 5 et/ou 6, ayant la caractéristique:
l) le rapport de mélange des différentes particules magnétiques est déterminé par le rapport optimal d'un dispositif d'aimant économique d'une part et d'un dispositif d'aimant permanent (M) d'un seul tenant et garantissant l'intensité de champ coercitif nécessaire d'autre part.
